# FASCICULE DE BREVET EUROPEEN

(11) **EP 1 870 588 B1**
(45) Date de publication et mention de la délivrance du brevet: **13.01.2010**
(21) Numéro de dépôt: 07109009.6
(22) Date de dépôt: 25.05.2007
(51) Int. Cl.: F02K 1/38, F02K 1/48

(54) **Mélangeur pour turbomachine à double flux, et tuyère et turbomachine associées**
Mischer für ein Doppelstromtriebwerk und entsprechende Düse und Strahltriebwerk
Mixer for double-flow turbomachine, and corresponding nozzle and turbomachine

(30) Priorité: 19.06.2006 FR 0652535
(43) Date de publication de la demande: 26.12.2007
(73) Titulaire: SNECMA, 75015 Paris (FR)
(72) Inventeur: Dussillols, Laurent, 77000, Melun (FR); Vuillemin, Alexandre, 75011, Paris (FR)
(74) Mandataire: Boura, Olivier

(56) Documents cités:
- WO-A-03/050403
- WO-A2-94/18446
- GB-A- 1 045 295
- US-A1- 2006 112 675
- US-B1- 6 412 283

## Description

### Arrière-plan de l'invention

La présente invention se rapporte au domaine général des mélangeurs destinés au mélange de flux gazeux concentriques d'une turbomachine à double flux. Elle vise plus particulièrement un mélangeur de type marguerite pour tuyère à flux confluents.

La pollution sonore est devenue aujourd'hui l'un des sujets de préoccupation pour les motoristes qui sont de plus en plus confrontés à la nuisance acoustique de leurs turbomachines. Les sources de bruit d'une turbomachine sont nombreuses mais il a été constaté que le bruit de jet en sortie de tuyère est le bruit prédominant lors de la phase de décollage d'un avion. Les autorités de certification étant de plus en plus exigeantes face aux émissions acoustiques des turbomachines, des efforts ont été demandés aux motoristes pour réduire le bruit de leurs turbomachines, et notamment le bruit de jet en sortie de tuyère.

Typiquement, une tuyère à flux confluents de turbomachine se compose d'un capot primaire centré sur l'axe longitudinal de la turbomachine, d'un capot secondaire disposé concentriquement autour du capot primaire de façon à définir un premier canal annulaire pour l'écoulement d'un flux extérieur (ou flux froid), et d'un corps central disposé concentriquement à l'intérieur du capot primaire de façon à définir un second canal annulaire pour l'écoulement d'un flux intérieur (ou flux chaud), le capot secondaire s'étendant au-delà du capot primaire.

Généralement, une tuyère à flux confluents comporte en outre un mélangeur qui est monté à l'extrémité aval du capot primaire. Un tel mélangeur est destiné à réduire le bruit de jet en sortie de la tuyère en forçant le mélange entre le flux froid et le flux chaud avant leur éjection. Il est en effet bien connu que des gains acoustiques sont obtenus en augmentant le mélange entre le flux froid et le flux chaud issus de la turbomachine.

Parmi les mélangeurs pour tuyère à flux confluents, on connaît en particulier le mélangeur de type marguerite qui se présente sous la forme d'une partie sensiblement sinusoïdale définissant des lobes intérieurs et des lobes extérieurs répartis sur toute la circonférence du capot primaire de la tuyère. On se réfèrera par exemple aux documents US 2006-112675,US 4,077,206 et US 4,117,671.

Avec un mélangeur de type marguerite, les lobes intérieurs forment des goulottes guidant radialement le flux froid vers le second canal dans lequel circule le flux chaud, et les lobes extérieurs forment d'autres goulottes guidant radialement le flux chaud vers le premier canal dans lequel s'écoule le flux froid. Ainsi, à la sortie du mélangeur, le flux froid et le flux chaud se mélangent par cisaillement selon une direction qui est essentiellement radiale. Ce mélange permet de générer des tourbillons dont l'axe de rotation est globalement axial et dont l'intensité dépend principalement des conditions d'éjection des flux (taux de dilution de la turbomachine, cisaillement entre les flux froid et chaud) et des conditions d'alimentation du fond des lobes du mélangeur.

Or, pour des conditions d'éjection des flux et d'alimentation du fond des lobes qui ne sont pas optimisées, l'intensité des tourbillons générés par un mélangeur de type marguerite n'est pas suffisante pour obtenir un mélange réellement efficace entre le flux froid et le flux chaud, ce qui limite la réduction des niveaux de bruit de jet obtenue lors des phases de décollage de l'avion.

### Objet et résumé de l'invention

La présente invention a donc pour but principal de pallier de tels inconvénients en proposant un mélangeur de type marguerite permettant d'améliorer le mélange entre le flux froid et le flux chaud afin de réduire les nuisances acoustiques de la turbomachine.

Ce but est atteint grâce à un mélangeur destiné au mélange de flux gazeux concentriques intérieur et extérieur dans une turbomachine à double flux, le mélangeur comportant un organe sensiblement cylindrique ayant à son extrémité aval une partie sensiblement sinusoïdale définissant des lobes intérieurs et des lobes extérieurs répartis sur la circonférence, les lobes extérieurs comportant chacun une paire de parois radiales sensiblement planes qui sont espacées l'une de l'autre dans le sens circonférentiel et reliées entre elles par un dôme curviligne extérieur de façon à former une goulotte extérieure guidant radialement le flux gazeux intérieur vers l'extérieur, les lobes intérieurs comportant chacun une paire de parois radiales sensiblement planes qui sont espacées l'une de l'autre dans le sens circonférentiel et reliées entre elles par un dôme curviligne intérieur de façon à former une goulotte intérieure guidant radialement le flux gazeux extérieur vers l'intérieur, les parois des lobes extérieurs étant disposées dans le prolongement radial des parois des lobes intérieurs tel que les parois radiales d'un même lobe extérieur s'étendent radialement selon des directions sensiblement parallèles entre elles, et dans lequel, conformément à l'invention, le prolongement de ces parois définit une zone dont l'axe de révolution de l'organe cylindrique est exclu.

Grâce à une telle disposition des parois radiales des lobes intérieurs, les flux gazeux empruntant les goulottes intérieures et extérieures sont animés d'un mouvement giratoire autour de l'axe de révolution de l'organe cylindrique à la sortie de ce dernier. Un tel mouvement giratoire a pour conséquence d'augmenter les effets de cisaillement entre le flux froid et le flux chaud en ajoutant une composante azimutale au mélange entre ces deux flux. Ainsi, le mélange flux froid / flux chaud est favorisé, ce qui a pour effet d'améliorer les performances de la tuyère en régime de croisière. D'un point de vue acoustique, l'ajout de cette composante azimutale au mélange permet de diminuer le bruit de jet à basses fréquences sans pour autant augmenter les niveaux de bruit à hautes fréquences.

De préférence, les parois radiales d'un même lobe intérieur s'étendent radialement selon des directions qui convergent en un point qui n'est pas situé sur l'axe de révolution de l'organe cylindrique.

Selon un mode de réalisation de l'invention, les parois radiales de tous les lobes intérieurs s'étendent radialement selon des directions qui convergent toutes sur un même cercle centré sur l'axe de révolution de l'organe cylindrique et concentrique à celui-ci. Ce mode de réalisation correspond à un même angle de giration pour tous les lobes du mélangeur.

L'invention a également pour objet une tuyère à flux confluents de turbomachine comportant un mélangeur tel que défini précédemment.

L'invention a encore pour objet une turbomachine comportant une tuyère à flux confluents équipée d'un mélangeur tel que défini précédemment.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 une vue schématique en perspective et en écorché d'une tuyère à flux confluents équipée d'un mélangeur selon l'invention ;
- la figure 2 est une vue partielle et en coupe du mélangeur de la figure 1 selon un plan radial perpendiculaire à l'axe longitudinal de la tuyère ; et
- la figure 3 est une vue agrandie de lobes du mélangeur selon la vue en coupe de la figure 2.

### Description détaillée d'un mode de réalisation

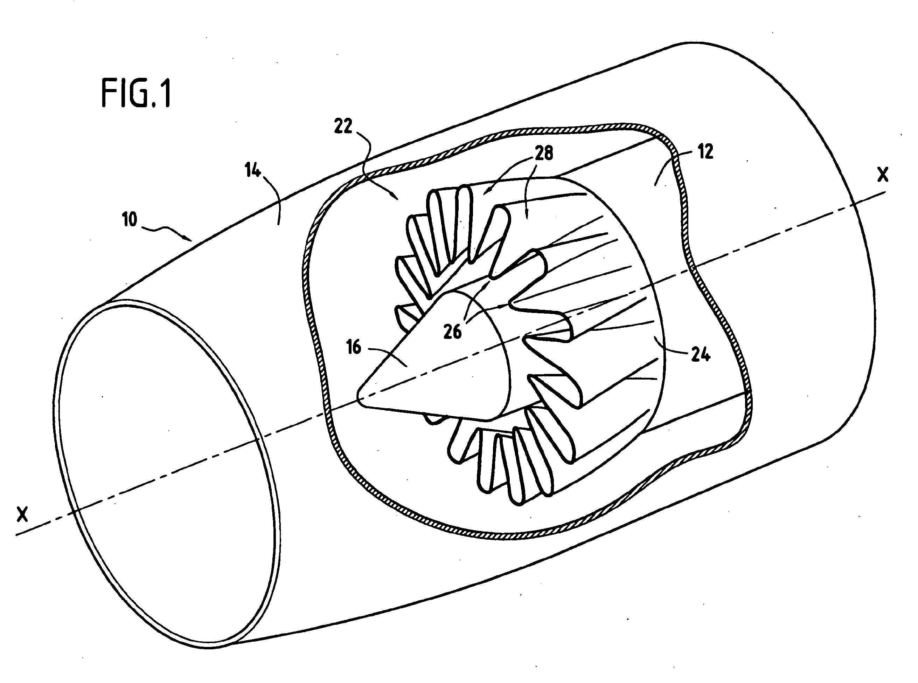

La figure 1 représente schématiquement en perspective et en écorché une tuyère 10 à flux confluents de turbomachine à double flux.

La tuyère 10, de forme axisymétrique par rapport à son axe longitudinal X-X, est typiquement formée d'un capot primaire 12, d'un capot secondaire 14 et d'un corps central 16 qui sont tous centrés sur l'axe longitudinal X-X de la tuyère.

Le capot primaire 12, de forme sensiblement cylindrique, s'étend selon l'axe longitudinal X-X de la tuyère. Le corps central 16 est disposé concentriquement à l'intérieur du capot primaire 12 et se termine par une partie sensiblement conique.

Le capot secondaire 14, également de forme sensiblement cylindrique, entoure le capot primaire 12 tout en lui étant concentrique et s'étend également selon l'axe longitudinal X-X de la tuyère. Le capot secondaire 14 s'étend longitudinalement vers l'aval au-delà du capot primaire 12.

On notera que, sur l'exemple de réalisation de la figure 1, le corps central 16 de la tuyère 10 est de type externe, c'est à dire que le corps central s'étend longitudinalement au-delà du bord de fuite du capot primaire 12.

Toutefois, l'invention peut également s'appliquer à une tuyère à flux confluents de type interne dans laquelle le bord de fuite du capot primaire s'étend longitudinalement au-delà du corps central de façon à recouvrir complètement ce dernier.

Dans la description qui suit, les termes « intérieur » et « extérieur » désignent un élément du mélangeur ou de la tuyère respectivement proche ou éloignée de l'axe longitudinal X-X de la tuyère.

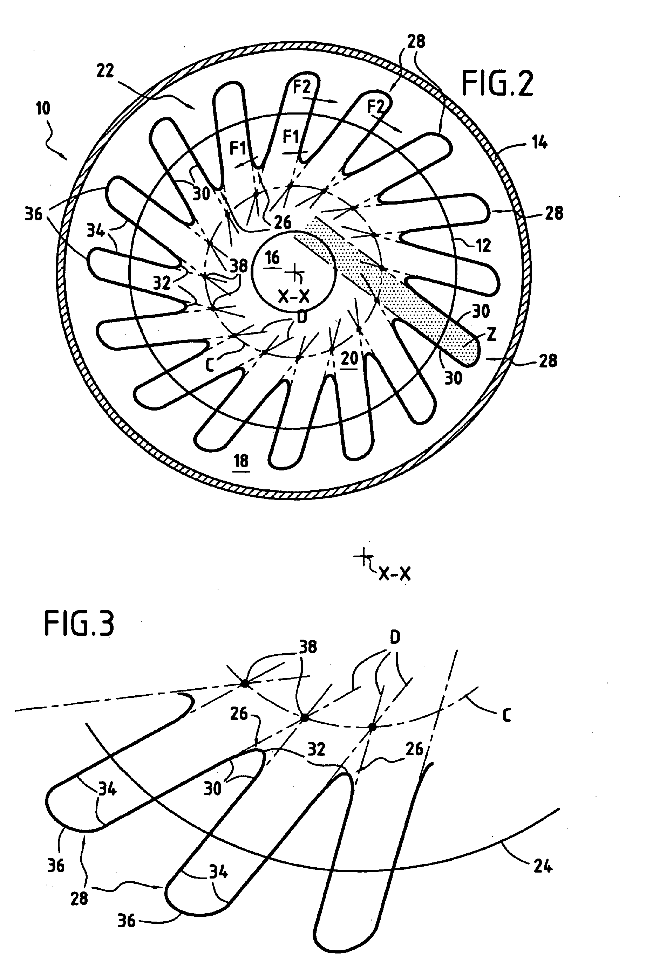

Comme représenté sur la figure 2, l'assemblage concentrique des éléments de la tuyère 10 permet de définir, d'une part entre les capots primaire 12 et secondaire 14, un premier canal annulaire 18 pour l'écoulement d'un flux gazeux extérieur issu de la turbomachine et appelé flux secondaire ou flux froid, et d'autre part, entre le capot primaire 12 et le corps central 16, un second canal annulaire 20 pour l'écoulement d'un flux gazeux intérieur issu de la turbomachine et appelé flux primaire ou flux chaud.

Les flux primaire et secondaire s'écoulant dans ces deux canaux annulaires 18, 20 se mélangent entre eux au niveau d'un mélangeur 22 fixé à l'extrémité aval du capot primaire 12.

Le mélangeur 22 selon l'invention est du type marguerite. Il comporte un organe 24 sensiblement cylindrique d'axe de révolution X-X ayant à son extrémité aval une partie sensiblement sinusoïdale définissant des lobes intérieurs 26 et des lobes extérieurs 28.

Les lobes intérieurs 26 et les lobes extérieurs 28 du mélangeur sont disposés en alternance et sont régulièrement répartis sur toute la circonférence de l'organe cylindrique 24.

Comme représenté sur la figure 2, les lobes intérieurs 26 font saillies radialement vers l'intérieur du capot primaire 12, c'est-à-dire qu'ils pénètrent dans le second canal 20 d'écoulement du flux chaud, tandis que les lobes extérieurs 28 font saillies radialement vers l'extérieur du capot primaire 12, c'est-à-dire qu'ils pénètrent dans le premier canal 18 d'écoulement du flux froid.

Par ailleurs, comme représenté à la figure 1, les lobes 26, 28 du mélangeur s'étendent tous sur une même distance selon l'axe longitudinal X-X de la tuyère. Toutefois, l'invention s'applique également aux mélangeurs dont les lobes ont des longueurs (dans le sens longitudinal) différentes.

De façon plus précise, les lobes intérieurs 26 sont formés chacun par une paire de parois 30 qui sont sensiblement planes, s'étendent selon des directions sensiblement radiales, sont espacées l'une de l'autre dans le sens circonférentiel et sont reliées entre elles vers l'intérieur par un dôme (ou arche) curviligne intérieur 32.

De la même manière, les lobes extérieurs 28 sont formés chacun par une paire de parois 34 qui sont sensiblement planes, s'étendent selon des directions sensiblement radiales, sont espacées l'une de l'autre dans le sens circonférentiel et sont reliées entre elles vers l'extérieur par un dôme curviligne extérieur 36.

Il est à noter que les parois radiales 34 d'un même lobe extérieur 28 sont disposées dans le prolongement radial des parois radiales 30 des deux lobes intérieurs 26 qui lui sont directement adjacents (et réciproquement).

Ainsi, les lobes intérieurs 26 forment chacun une goulotte (ou conduit) intérieure permettant de guider vers l'intérieur le flux froid s'écoulant dans le premier canal 18 de la tuyère, c'est-à-dire que le flux froid empruntant de telles goulottes intérieures est dirigé radialement vers l'axe longitudinal X-X de la tuyère pour se mélanger au flux chaud circulant dans le second canal 20 de la tuyère.

De même, les lobes extérieurs 28 forment chacun une goulotte (ou conduit) extérieure par laquelle le flux chaud s'écoulant dans le second canal 20 de la tuyère est guidé radialement vers l'extérieur, c'est-à-dire que le flux chaud empruntant de telles goulottes extérieures est dirigé en direction du premier canal 18 de la tuyère pour se mélanger au flux froid y circulant.

De la sorte, un mélange s'effectue entre le flux froid s'écoulant dans le premier canal 18 de la tuyère et le flux chaud s'écoulant dans le second canal 20. Ce mélange, qui a notamment pour but de réduire le bruit de jet de la tuyère, s'effectue selon une direction globalement radiale. Ceci est dû à la géométrie particulière du mélangeur avec ses lobes qui pénètrent radialement dans les canaux d'écoulements respectifs des flux froid et chaud.

Selon l'invention, les parois radiales 34 d'un même lobe extérieur 28 sont sensiblement parallèles entre elles et le prolongement de ces parois définit une zone Z dont l'axe longitudinal X-X de la tuyère est exclu (cet axe est confondu avec l'axe de révolution de l'organe cylindrique 24).

En d'autres termes, les deux parois radiales 34 d'un même lobe extérieur 28 s'étendent selon deux directions parallèles, ces deux directions délimitant entre elles une zone Z qui ne passe pas par l'axe longitudinal X-X de la tuyère (l'axe X-X n'appartient pas à cette zone Z). Sur l'exemple de la figure 2, la zone Z est partiellement représentée en pointillés pour un lobe extérieur 28.

De préférence, les parois radiales 30 d'un même lobe intérieur 26 s'étendent radialement selon des directions D qui convergent en un point 38 qui n'est pas situé sur l'axe longitudinal X-X de la tuyère.

Ainsi, comme illustré sur les figures 2 et 3, si l'on prend l'un des lobes extérieurs 28 du mélangeur, on constate bien que les deux parois radiales 34 qui le constituent s'étendent radialement selon des directions qui sont parallèles entre elles (elles ne convergent pas).

De même, pour un même lobe intérieur 26, les deux parois radiales 30 qui le constituent s'étendent selon deux directions D qui convergent, dans un plan radial perpendiculaire à l'axe longitudinal X-X de la tuyère, en un point 38 qui n'est pas situé sur cet axe longitudinal X-X. En d'autres termes, la droite correspondant à l'intersection des deux plans dans lesquels se situent les deux parois radiales 34 d'un même lobe intérieur 26 est distincte de l'axe longitudinal X-X de la tuyère.

Une telle disposition des parois radiales des lobes du mélangeur correspond à donner à ces lobes une composante azimutale (on dit que les lobes sont « vrillés » autour de l'axe longitudinal de la tuyère). Il en résulte que l'air circulant dans les goulottes formées par ces lobes est animé à la sortie du mélangeur d'un mouvement giratoire autour de l'axe longitudinal de la tuyère.

Dans le mode de réalisation illustré par les figures 2 et 3, pour l'ensemble du mélangeur 22, tous les points 38 de convergence des directions D selon lesquelles s'étendent les parois radiales 34 des lobes intérieurs 26 sont situés, dans un plan radial perpendiculaire à l'axe longitudinal X-X de la tuyère, sur un même cercle fictif C. Ce cercle C est centré sur l'axe de révolution de l'organe cylindrique 24 et il est concentrique à ce dernier.

Ce mode de réalisation correspond à un angle de giration sensiblement identique pour tous les lobes du mélangeur 22. On notera que, comme représenté à la figure 2, le diamètre du cercle de convergence C peut être supérieur à celui du corps central 16 de la tuyère. Alternativement, il pourrait lui être inférieur ou égal. On notera également que plus le diamètre du cercle C sera élevé, plus le mouvement giratoire donné à l'écoulement des flux gazeux sera important.

Le mouvement giratoire donné par le profil des parois radiales des lobes permet de créer un mélange selon une direction sensiblement circonférentielle entre le flux chaud et le flux froid.

En effet, le flux froid s'écoulant dans le premier canal 18 de la tuyère est guidé principalement selon une direction radiale vers l'intérieur lorsqu'il emprunte les lobes intérieurs 26 et, à l'extrémité aval de ces lobes, une partie de ce flux est dirigé selon une direction circonférentielle F1 dans le flux chaud. Sur l'exemple de réalisation de la figure 2, cette direction circonférentielle F1 est dirigée dans le sens inverse de rotation des aiguilles d'une montre.

De même, le flux chaud s'écoulant dans le second canal 18 de la tuyère est guidé principalement selon une direction radiale vers l'extérieur lorsqu'il emprunte les lobes extérieurs 28 et, à l'extrémité aval de ces lobes, une partie de ce flux est dirigé selon une direction circonférentielle F2 dans le flux froid. Cette direction circonférentielle F2 est de sens opposée à celle de la direction F1, c'est-à-dire que sur l'exemple de réalisation de la figure 2, elle est dirigée dans le sens horaire.

Il en résulte qu'au cisaillement principal flux froid / flux chaud s'effectuant selon une direction globalement radiale, s'ajoute un cisaillement secondaire entre ces flux selon une direction circonférentielle qui permet de renforcer le mélange entre les flux et, par conséquent, d'améliorer l'efficacité acoustique du dispositif.

Comme précédemment expliqué, on notera que plus le diamètre du cercle fictif C de convergence des directions D selon lesquelles s'étendent les parois radiales 34 des lobes intérieurs 26 sera élevé, plus le mouvement giratoire donné à l'écoulement des flux gazeux sera important.

## Revendications

1. Mélangeur (22) destiné au mélange de flux gazeux concentriques intérieur et extérieur dans une turbomachine à double flux, le mélangeur comportant un organe (24) sensiblement cylindrique ayant à son extrémité aval une partie sensiblement sinusoïdale définissant des lobes intérieurs (26) et des lobes extérieurs (28) répartis sur la circonférence, les lobes extérieurs (28) comportant chacun une paire de parois radiales (34) sensiblement planes qui sont espacées l'une de l'autre dans le sens circonférentiel et reliées entre elles par un dôme curviligne extérieur (36) de façon à former une goulotte extérieure guidant radialement le flux gazeux intérieur vers l'extérieur, les lobes intérieurs (26) comportant chacun une paire de parois radiales (30) sensiblement planes qui sont espacées l'une de l'autre dans le sens circonférentiel et reliées entre elles par un dôme curviligne intérieur (32) de façon à former une goulotte intérieure guidant radialement le flux gazeux extérieur vers l'intérieur, les parois (34) des lobes extérieurs étant disposées dans le prolongement radial des parois (30) des lobes intérieurs, tel que les parois radiales (34) d'un même lobe extérieur (28) s'étendent radialement selon des directions sensiblement parallèles entre elles, **caractérisé en ce que** le prolongement de ces parois définit une zone (Z) dont l'axe de révolution (X-X) de l'organe cylindrique (24) est exclu.

2. Mélangeur (22) selon la revendication 1, dans lequel les parois radiales (30) d'un même lobe intérieur (26) s'étendent radialement selon des directions (D) qui convergent en un point qui n'est pas situé sur l'axe de révolution (X-X) de l'organe cylindrique (24).

3. Mélangeur (22) selon la revendication 2, dans lequel les parois radiales (30) de tous les lobes intérieurs (26) s'étendent radialement selon des directions (D) qui convergent toutes sur un même cercle (C) centré sur l'axe de révolution (X-X) de l'organe cylindrique (24) et concentrique à celui-ci.

4. Tuyère à flux confluents de turbomachine, **caractérisée en ce qu'**elle comporte un mélangeur (22) selon l'une quelconque des revendications 1 à 3.

5. Turbomachine comportant une tuyère à flux confluents équipée d'un mélangeur (22) selon l'une quelconque des revendications 1 à 3.

## Claims

1. A mixer (22) for mixing inner and outer concentric gas streams in a bypass turbomachine, the mixer comprising a substantially cylindrical member (24) having a substantially sinusoidal portion at its downstream end defining inner lobes (26) and outer lobes (28) distributed around its circumference, each outer lobe (28) having a pair of substantially plane radial walls (34) that are spaced apart from each other in the circumferential direction and that are connected together by an outer curvilinear dome (36) so as to form an outer gutter guiding the inner gas stream radially outwards, each inner lobe (26) comprising a pair of substantially plane radial walls (30) that are spaced apart from each other in the circumferential direction and that are interconnected by an inner curvilinear dome (32) so as to form an inner gutter guiding the outer gas stream radially inwards, the walls (34) of the outer lobes being disposed to extend radially the walls (30) of the inner lobes, so that the radial walls (34) of a given outer lobe (28) extend radially in directions that are substantially mutually parallel, **characterised in that** these walls when extended define a zone (Z) from which the axis of symmetry (X-X) of the cylindrical member (24) is excluded.

2. A mixer (22) according to claim 1, in which the radial walls (30) of a given inner lobe (26) extend radially in directions (D) that converge on a point that is not situated on the axis of revolution (X-X) of the cylindrical member (24).

3. A mixer (22) according to claim 2, in which the radial walls (30) of all of the inner lobes (26) extend radially along directions (D) that all converge on a common circle (C) centered on the axis of symmetry (X-X) of the cylindrical member (24), concentrically thereabout.

4. A converging-stream nozzle for a turbomachine, **characterised in that** the nozzle includes a mixer (22) according to any one of claims 1 to 3.

5. A turbomachine including a converging-stream nozzle fitted with a mixer (22) according to any one of claims 1 to 3.

## Patentansprüche

1. Mischer (22) zum Mischen der konzentrischen inneren und äußeren Gasströmung eines Doppelstromtriebwerks, wobei der Mischer ein im wesentlichen zylindrisches Organ (24) umfaßt, das an seinem stromabwärtigen Ende ein im wesentlichen sinusoidales Teil besitzt, das innere (26) und äußere (28) über den Umfang verteilte Lappen definiert, wobei die äußeren Lappen (28) jeweils ein Paar im wesentlichen ebener radialer Wände (34) aufweisen, die untereinander über den Umfang verteilt und miteinander über einen gebogenen äußeren Abschnitt (36) verbunden sind, um eine äußere Ablaufrinne zu bilden, die die innere Gasströmung radial nach außen leitet, wobei die inneren Lappen (26) jeweils ein Paar im wesentlichen ebener radialer Wände (30) aufweisen, die untereinander über den Umfang verteilt und miteinander über einen gebogenen inneren Abschnitts (32) verbunden sind, um eine innere Ablaufrinne zu bilden, die die äußere Gasströmung radial nach innen leitet,
wobei die Wände (34) der äußeren Lappen auf der radialen Verlängerung der Wände (30) der inneren Lappen derart angeordnet sind, daß die radialen Wände (34) ein und desselben äußeren Lappens (28) sich in im wesentlichen zueinander parallele radiale Richtungen erstrecken,
**dadurch gekennzeichnet, daß** die Verlängerung der Wände eine Zone (Z) definiert, die die Drehachse (X-X) des zylindrischen Organs nicht umfaßt.

2. Mischer (22) nach Anspruch 1, wobei die radialen Wände (30) ein und desselben inneren Lappens (26) sich radial in Richtungen (D) erstrecken, die in einem Punkt konvergieren, der nicht auf der Drehachse (X-X) des zylindrischen Organs (24) liegt.

3. Mischer (22) nach Anspruch 2, wobei die radialen Wände (30) aller inneren Lappen (26) sich radial in Richtungen (D) erstrecken, die alle auf demselben Kreis (C) konvergieren, der auf der Drehachse (X-X) des zylindrischen Organs zentriert ist und diesbezüglich konzentrisch ist.

4. Strömungsdüse eines Doppelstromtriebwerks, **dadurch gekennzeichnet, daß** sie einen Mischer (22) nach einem der Ansprüche 1 bis 3 aufweist.

5. Triebwerk, umfassend eine Strömungsdüse mit einem Mischer (22) nach einem der Ansprüche 1 bis 3.
